(19) Europäisches Patentamt
European Patent Office
Office européen des brevets

(11) **EP 2 830 190 B1**

(12) **EUROPEAN PATENT SPECIFICATION**

(45) Date of publication and mention
of the grant of the patent:
**28.08.2019 Bulletin 2019/35**

(51) Int Cl.:
*H02J 7/14* (2006.01)     *H02K 21/24* (2006.01)
*H02P 6/14* (2016.01)     *H02K 1/14* (2006.01)
*H02K 11/33* (2016.01)

(21) Application number: **14177346.5**

(22) Date of filing: **16.07.2014**

(54) **Modular electric power conversion system for a reversible electromagnetic device**

Modulares Stromumwandlungssystem für eine umkehrbare elektromagnetische Vorrichtung

Système de conversion de puissance électrique modulaire pour un dispositif électromagnétique réversible

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2013 IT TO20130599**

(43) Date of publication of application:
**28.01.2015 Bulletin 2015/05**

(73) Proprietor: **Ge Avio S.r.l.**
**Rivalta di Torino (IT)**

(72) Inventors:
• **Cipriani, Marco**
**10135 Torino (IT)**
• **Ettorre, Stefano**
**70126 Bari (IT)**
• **Nitti, Michele**
**76011 Bisceglie (IT)**

(74) Representative: **Nannucci, Lorenzo et al**
**Studio Torta S.p.A.**
**Via Viotti, 9**
**10121 Torino (IT)**

(56) References cited:
**WO-A2-2004/004109     US-A- 5 514 923**

## Description

The present invention relates to a modular electric power conversion system for a reversible electromagnetic device.

Electromagnetic devices (or "electric machines") having reversible operation as a generator and as an electric motor, i.e. which can convert kinetic energy into electric power in a first operating mode (as a generator) and electric power into kinetic energy in a second operating mode (as a motor), are known.

There are many situations in which using such reversible electromagnetic devices is advantageous, for example in systems which require the presence of a rotating element, in which the rotation of such an element can be utilized to generate electric power or, alternatively, to cause the rotation of the element itself by supplying electric power.

Generally, important requirements for such electromagnetic devices are to be compact and light, in addition to being cost-effective to be manufactured, in particular in the field for vehicular applications (e.g. for land vehicles or aircrafts).

Patent Applications WO 2009/093181 and WO 2009/093183 describe an electromagnetic device with reversible operation as a generator-motor, having modular features.

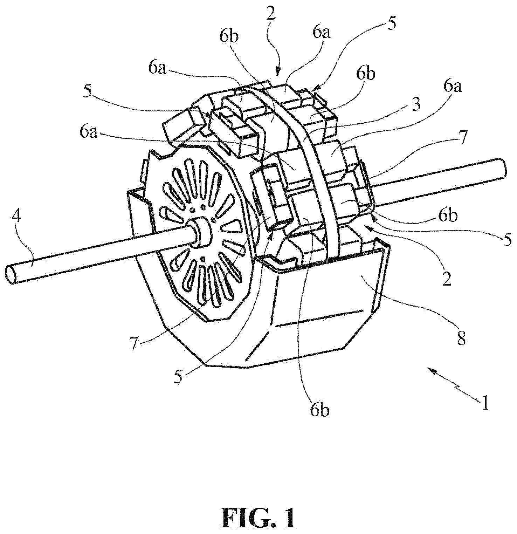

With reference to figure 1, such an electromagnetic device, denoted as a whole by reference numeral 1, comprises a plurality of mutually independent modules (or cells) 2, each capable of operating reversibly as a motor or, alternatively, as a generator.

The electromagnetic device 1 comprises a disc- or ring-shaped rotor 3, either mounted to a rotation shaft 4 or integrated in a turbine impeller, as disclosed in Patent Applications WO 2009/093181 and WO 2009/093183.

Rotor 3 carries a plurality of permanent magnets (not shown in figure 1), equally spaced apart along an outer circumference of the disc or ring, and defining a sequence of alternatively opposite poles.

Each module 2 of the electromagnetic device 1 comprises at least one magnetic yoke 5, having two polar expansions 6a, 6b, about which a respective coil is wound, arranged facing a respective pair of permanent magnets of rotor 3 (figure 1 shows one pair of magnetic yokes 5 for each module 2, arranged on opposite sides of rotor 3, each facing the respective pair of permanent magnets).

The magnetic yokes 5 as a whole form the stator of the electromagnetic device 1.

Each magnetic yoke 5 (or pair of magnetic yokes) forms a magnetic circuit with the respective pair of permanent magnets, which is adapted to contribute to the operation as a generator or, alternatively, as a motor of the electromagnetic device 1.

In particular, the coils wound about the polar expansions 6a, 6b of each magnetic yoke 5 may be individually and electrically coupled, alternatively either to an electric power source or to an electric user or load; moreover, each magnetic yoke 5 is mounted on a respective support 7 (diagrammatically shown in figure 1), the position of which is independently adjustable, both axially and radially, with respect to rotor 3, so as to allow a static and/or dynamic adjustment of the gap between the polar expansions 6a, 6b and the respective permanent magnets (i.e. of the gap of the respective magnetic circuit).

The electromagnetic device 1 thus allows a reversible motor-generator operation of each module 2, and furthermore, in principle, the simultaneous operation of some of modules 2 as a motor and of other modules 2 as a generator.

The electromagnetic device 1 further comprises a casing 8, in which the rotor 3 and the stator of the electromagnetic device 1 are assembled, and which additionally allows the rotation shaft 4 to pass through and rotate.

In a known manner, power conversion for modular electric machines is currently achieved by using static AC/AC converters (alternating current/alternating current converters), which accept at input a poly-phase system of voltages and currents. Static power converters manage the extraction of electric power from the electric machine in a controlled manner to adapt it to the needs of users, which may be either isolated loads or the electric grid.

The electromagnetic device 1 described in aforesaid Patent Applications WO 2009/093181 and WO 2009/093183 has a number of single-phase interfaces with respect to a power converter, each interface corresponding to a respective module 2; therefore, the contributions of the respective modules 2 must be combined together, by means of appropriate connections, to provide a single poly-phase interface, which is compatible with the input of the power converter. Several phase groups (or more simply phases) may be provided by connecting the modules 2 in series and/or in parallel, while the poly-phase interface may be appropriately arranged by connecting together the single phase groups.

However, the connection in parallel of modules 2 requires the alternating quantities (typically voltages) that are induced in the modules 2 by electromagnetic effect to be isomorphic, i.e. to have the same amplitude, frequency and phase. Indeed, imbalances, which determine a flow of noise electric current in the modules 2, are generated in the poly-phase system if the isomorphism condition is not respected. Such an electric current, although not contributing to the useful power available for the load, clearly implies additional losses by Joule effect and, thus, an efficiency loss of the power conversion system.

The imperfect isomorphism between electric quantities may be caused by various factors, which commonly occur during the operation of the conversion system, including for example the mechanical misalignment between the modules 2, the heterogeneity of the electromagnetic properties of the materials used for manufacturing the corresponding stator cores and the variability of the gap width due to the mechanical tolerances of the components.

By requiring at the output from the electromagnetic device 1 a poly-phase system obtained by combining the contributions of the single modules 2, the adoption of known conversion systems thus requires manufacturing of the same electromagnetic device 1 with a high degree of accuracy and selection of the parts forming the various modules 2, in order to make the device with components as homogenous as possible from the dimensional point of view and with regards to electromagnetic properties, so as to reduce voltage asymmetries and recirculation currents accordingly.

However, it is apparent that such requirements clash with standard manufacturing needs, and in all cases tend to increase the manufacturing cost of the electromagnetic devices.

In the case of the electromagnetic device 1 in the aforesaid Patent Applications WO 2009/093181 and WO 2009/093183, by virtue of the independence of the various modules 2 which form the stator, it is possible to mechanically correct misalignments and gap variability for each module 2, thus limiting the above-described parasitic effects.

However, such corrective calibration interventions require long times and considerable resources, in addition to the use of sophisticated instruments and the employment of specialized technicians; in all cases, calibration cannot be carried out in operating conditions, i.e. during the operation of the electromagnetic device 1.

Furthermore, known power conversion systems, despite allowing the alternative operation as a motor or as a generator of the electromagnetic devices do not allow the simultaneous operation as a motor and as a generator, as the modularity of the above-described electromagnetic device 1 should instead allow.

A further limitation associated with the power conversion systems of the known type consists in the difficulty of providing so-called "fault tolerant" systems, i.e. systems capable of operating, although at reduced performance, in the presence of one or more faults.

For example, one possibility may consist in using a plurality of poly-phase converters associated with the same outputs of the electromagnetic device, connected to one another in parallel. However, despite ensuring conversion system redundancy, such a solution does not allow to continue operation in case of fault of the electromagnetic device. Furthermore, possible faults to one of the converters could compromise the integrity of the entire system because the converters share the same input poly-phase interface.

US 5 514 923 A discloses a high efficiency DC motor with reversible generator and flywheel characteristics, incorporating brushless electronic switching to phase the attractive and repulsive forces between the permanent magnets in the rotor and wire wound air core coils in the stator. The unequal number of magnets and coils provides a designed imbalance, so that proper energization induces rotation and torque in the motor's dual flywheel rotor.

WO2004/004109 A2 discloses a system for controlling an electric motor comprising an encoder, a central processor in communication with the encoder, a module processor in communication with the central processor, feedback circuitry in communication with the module processor, wherein the encoder is an electronic device that provides rotor and stator positional information to the central processor, and further comprising a user interface in communication with the central processor, wherein the user interface enables a user to select preferred operational parameters for the electric motor.

It is thus felt the need to provide a power conversion system, in particular of the modular type, for reversible electromagnetic devices, which allows to overcome the limitations associated with the systems of known type.

It is the object of the present invention to meet such a need.

According to the present invention, a conversion system is provided, as defined in the appended claims.

Now, for a better understanding of the present invention, preferred embodiments will be described, by way of mere non-limitative example and with reference to the accompanying drawings, in which:

- figure 1 a diagrammatic, perspective view of a modular reversible electromagnetic device of known type;
- figure 2 is a simplified block diagram of a first embodiment of a modular electric power conversion system, according to the present solution;
- figure 3 is a simplified block diagram of a second embodiment of the modular electric power conversion system;
- figure 4 is a simplified block diagram of a further variant of a modular electric power conversion system;
- figure 5 shows a possible circuit implementation of a converter in the modular electric power conversion system;
- figure 6 diagrammatically shows an exemplary use of the modular electric power conversion system; and
- figures 7a-7b, 8a-8d and 9a-9b diagrammatically show possible constructive asymmetries in the electromagnetic device.

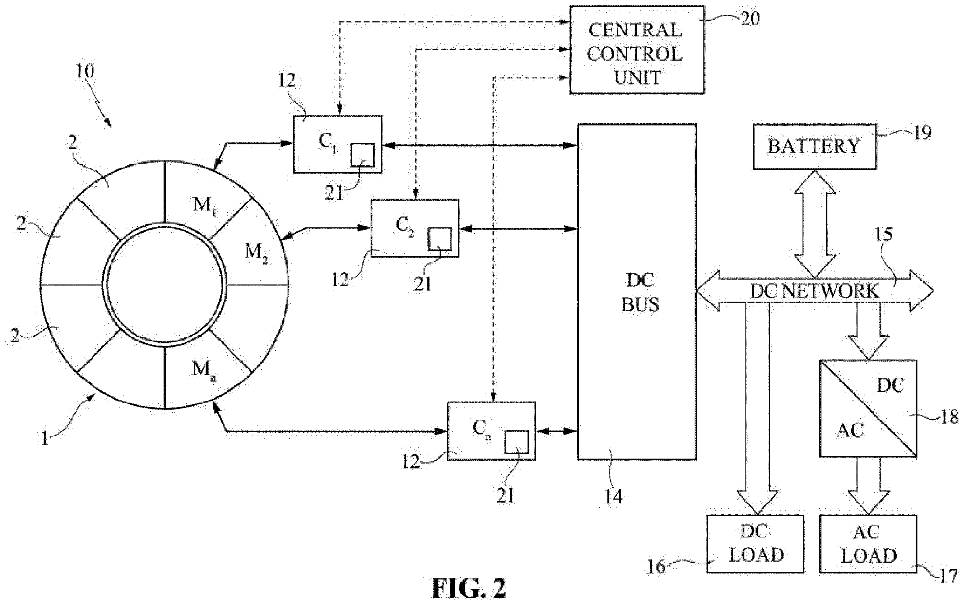

A modular electric power conversion system, indicated as a whole by reference numeral 10, for an electromagnetic device, indicated by reference numeral 1, for example of the type described in the aforesaid Patent Applications WO 2009/093181 and WO 2009/093183, diagrammatically illustrated here (and not described again in detail), will now be described with reference to figure 2.

The electromagnetic device 1 thus comprises a plurality of mutually independent modules 2, herein also indicated by $M_1 .. M_n$ (with n being an integer greater than one), each capable of reversibly operating as a motor or, alternatively, as an electric generator.

The conversion system 10 comprises a plurality of static type converters 12, also indicated by $C_1 .. C_n$, which operate an AC/DC conversion (alternating current/direct current conversion).

In the embodiment shown in figure 2, each converter 12 is of the single-phase type, and is connected to a respective module 2 of the electromagnetic device 1.

Each converter 12 thus has a first AC input/output interface of the single-phase type connected to a respective module 2 of the electromagnetic device 1.

Converters 12 also have a respective second DC output/input interface connected to a DC bus 14, for example of the capacitive type. In particular, the second output/input interfaces are connected to one another in parallel to form the same DC bus 14 (which is thus shared by all converters 12).

The conversion system 10 further comprises a DC network 15, supplied by the DC bus 14, to which one or more DC loads 16 and/or one or more AC loads 17 are connected, the latter by interposing a respective DC/AC converter 18 (direct current/alternating current converter).

An energy storage device 19, for example including a battery, is connected to the DC network 15, and is coupled to the DC bus 14.

In the embodiment shown in figure 2, the conversion system 10 further comprises a central control unit 20, in particular including a microprocessor, a microcontroller, or similar processing unit, operatively coupled to the converters 12, for example in a cabled manner, i.e. by means of a communication bus, or in wireless mode, by means of appropriate communication protocol.

In this embodiment, each module 2 of the electromagnetic device 1 is individually managed by the respective converter 12, under the supervision of the central control unit 20, thus forming an independent single-phase conversion system which transforms the alternating quantities (induced by electromagnetic effect) into DC quantities. Each module 2 may alternatively operate as an electric motor or as an electric generator, and may be additionally activated or deactivated according to the operating needs of the conversion system 10.

As described in greater detail below, the converters 12 are intelligent blocks, i.e. provided with autonomous processing capability, and are all provided with electronic components needed to perform power conversion, and with calculation and communication systems which allow to execute appropriate control algorithms and to communicate with the central control unit 20.

In particular, each converter 12 is provided with a local control unit 21 including, for example, a microprocessor, a microcontroller, a FPGA (Field Programmable Gate Array), a DSP (Digital Signal Processor), or a similar processing and calculation unit.

In this embodiment, the central control unit 20 may allow the synchronization of the various converters 12, in order to implement more or less sophisticated conversion algorithms (of a known type, not described here in detail), for example those based on an alternating quantity vector control.

The presence of the energy storage device 19 allows power flux inversion in addition to providing a back-up function for supplying the DC loads 16 and/or the AC loads 17 in case of faults. In particular, by taking electric power from the energy storage device 19, as energy source, it is possible to supply the electromagnetic device 1 as an electric motor by means of the converters 12, thus transforming the stored electric energy into mechanical energy.

The modularity of the conversion system 10, combined with the intrinsic modularity of the electromagnetic device 1, allows in particular the simultaneous operation as a motor/generator of the modules 2 of the electromagnetic device 1, each module 2 being indeed able to operate, in combination with the associated converter 12, either as a motor or as an electric generator, autonomously and independently from the other modules 2 (and associated converters 12).

Furthermore, the adoption of intelligent-type converters 12, each provided with its own local control unit 21, allows online reconfigurability (i.e. in real-time during operation) of the electromagnetic device 1, thus allowing, for example, to establish which and how many modules 2 to dedicate to operation as a motor or as an electric generator.

The central control unit 20 may configure the type of operation of each converter 12 (and of the associated module 2) by sending appropriate control and configuration signals. The central control unit 20 may itself receive appropriate configuration instructions from the outside.

In general, the modularity of the conversion system 10 allows to manage each converter 12 and associated module 2 in an entirely autonomous manner, independently from the other components of the conversion system 10.

Moreover, modules 2 which have faults, for example caused by overheating, can be switched off, deactivated and disconnected from the DC bus 14, thus avoiding the propagation of the faults and damage to the conversion system 10. Such an automatic switch-off of modules 2 may be managed by the central control unit 20 or by the corresponding local control units 21, for example as a function of the temperatures measured by appropriate temperature sensors.

In general, the conversion system 10 is reconfigurable and self-adaptive, also dynamically and in real-time (in addition to during the phase of designing the system).

The contributions of the various converters 12, and of the associated modules 2, are combined in DC on the DC bus 14; therefore, possible amplitude differences in the generated direct quantities (for example, the so-called ripples on the electric voltages generated by the converters 12) are "self-leveled" by virtue of the capacitive contribution of the same DC bus 14.

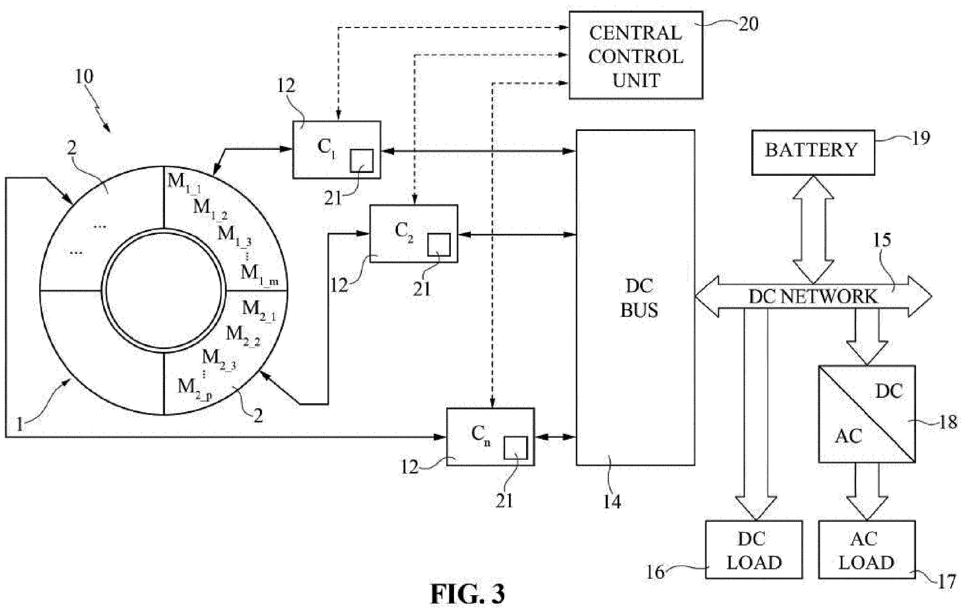

As shown in figure 3, a second embodiment of the present solution may include, in order to limit the number of converters 12 required in the conversion system 10, grouping two or more modules 2, so as to form a plurality of poly-phase systems with a desired number of phases (figure 3 shows two groups of m and p phases, with m and p being integers greater than or equal to two).

Each group, which may consist of a respective number of modules 2 connected to one another in series and/or in parallel, is in this case connected to a respective converter 12 of the poly-phase type.

The reconfigurability of the conversion system 10 may also extend, in this case, to assigning a desired variable number of modules 2 to each converter 12, for this purpose appropriate switches (not shown) being provided, which can be selectively controlled by the central control unit 20 and/or by the control units 21. As previously illustrated, each converter 12, and the corresponding group of modules 2, may be further configured to operate as a motor or as an electric generator by the central control unit 20 and/or control units 21, and may also be selectively deactivated.

It is thus apparent that the use of a modular conversion system 10 with shared DC bus 14 allows to implement hybrid solutions with respect to figures 2 and 3, in which some of the modules 2 are grouped to form poly-phase subsystems and other modules 2 are instead managed individually by respective converters 12 of the single-phase type. Furthermore, this configuration freedom also allows to manage several DC buses at different voltages (for example with respective voltages of 270 V and 28 V) with a single electromagnetic device 1, thus reducing the DC/DC conversions in the electric system.

In any case, converters 12 may advantageously be provided aboard the electromagnetic device 1, coupled in an integrated manner to the respective modules 2, for example being made on respective printed circuit boards (PCBs) mechanically coupled to the supports 7 of the respective modules 2, within the casing 8 of the electromagnetic device 1. For this purpose, an appropriate high temperature resistant technology may be used to manufacture such printed circuit boards and the corresponding electronic components.

Such a solution is highly compact and light, also by virtue of the reduction of the length of the connection wires and the sharing of the casing 8 by the electromagnetic device and the static conversion system, thus being particularly indicated for vehicular applications.

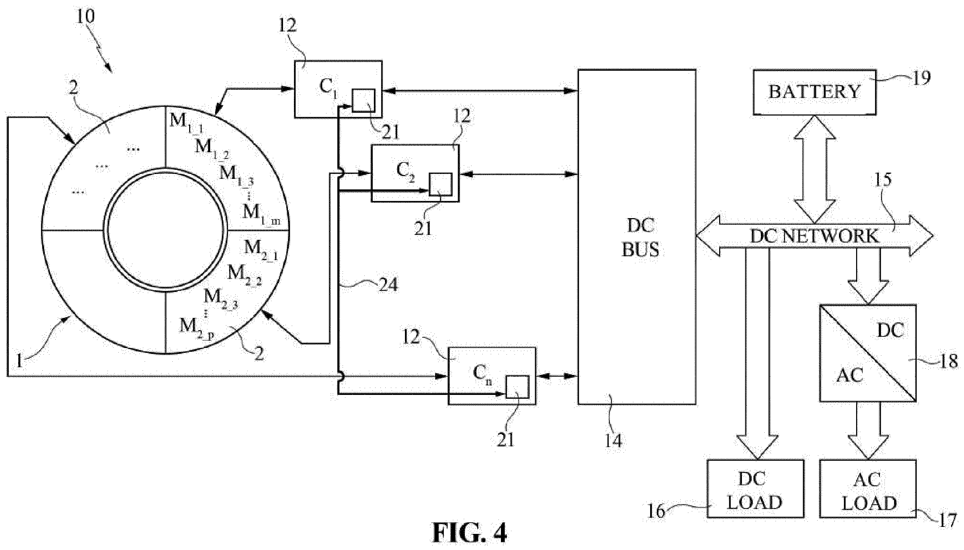

A further embodiment of the conversion system 10, shown in figure 4, is instead free from central control unit 20.

In this case, the local control units 21 of the converters 12 are connected in reciprocal direct communication, for example by means of a communication bus 24, so as to exchange control signals and commands. An appropriate communication protocol may conveniently be provided on the communication bus 24 and an appropriate hierarchy relationship of the master-slave type may be provided between the local control units 21.

In particular, a first local control unit 21, operating as a master unit, in addition to performing control functions with respect to the other local control units 21, operating as slave units, may be able to receive appropriate control signals from the outside, in order to manage appropriate conversion strategies.

Each local control unit 21 may advantageously share the same processing resources to define the conversion strategy so as to operate as a master unit, if this is required during the step of reconfiguring (also dynamically) the conversion system; for example, in case of master fault, the immediately next slave unit will take the master unit functions itself. Moreover, several local control units 21 may be provided, each operating as a master unit and with associated respective converters, operating as slave units.

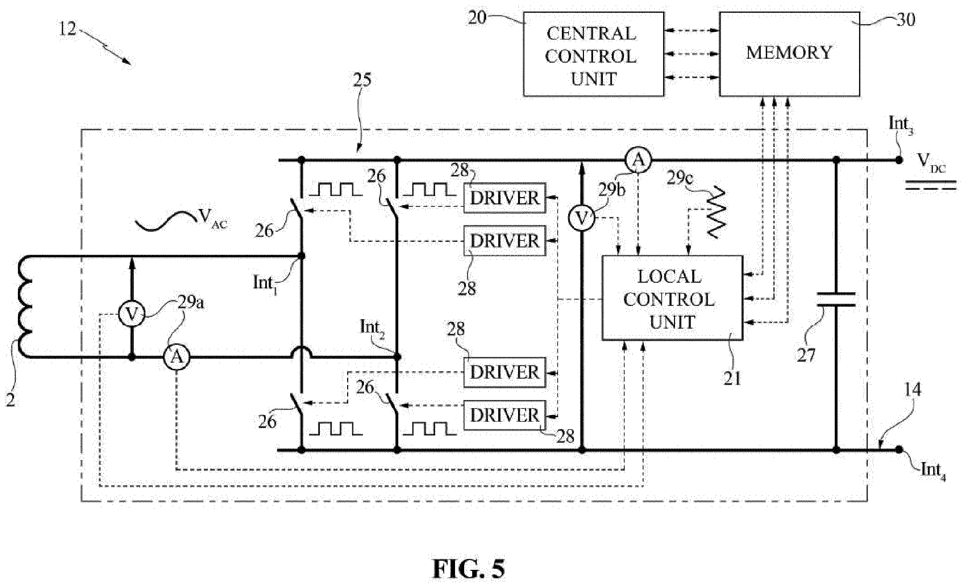

With reference to figure 5, a possible embodiment of a converter 12 will now be described by way of example, in this case of the single-phase type, i.e. having the first input/output interface connected to a single module 2 of the electromagnetic device 1 (diagrammatically shown here with an equivalent inductance). Changes which will be apparent for a person skilled in art are to be made if a poly-phase interface is required.

Converter 12 comprises a bridge circuit 25 of the single-phase type consisting (in a known manner, here not described in detail) of an appropriate configuration of controlled switches 26, each made with a respective semiconductor power device (e.g. a power transistor).

The bridge circuit 25 has: a first a pair of interface terminals $Int_1$, $Int_2$, between which the respective module 2 is connected and between which an alternating voltage $V_{AC}$ is present; and a second pair of interface terminals $Int_3$, $Int_4$, between which a capacitor element 27 is connected, having local energy storage function, and between which a direct voltage $V_{DC}$ is present.

In particular, the second pair of interface terminals $Int_3$, $Int_4$ and the capacitor element 27 are additionally connected to the DC bus 14.

The local control unit 21 supplies appropriate control signals, for example PWM (Pulse Width Modulation) control signals, to the controlled switches 26, by means of the interposition of appropriate control modules (drivers) 28.

Converter 12 further comprises: appropriate AC feedback sensors 29a, and appropriate DC feedback sensors 29b, including voltage and current sensors, coupled to the first pair of interface terminals $Int_1$, $Int_2$ and to the second pair of interface terminals $Int_3$, $Int_4$, respectively; converter 12 further comprises appropriate temperature sensors 29c.

The PWM control signals and the feedback signals from the sensors (current, voltage and temperature measurements) are managed by the local control unit 21 and are made available to the central control unit 20 (if present) and/or to the local control unit 21 of the other converters 12 of the conversion system 10, on communication buses or by interposing a shared memory 30.

The local control unit 21 may receive control signals from the outside according to which operating set points may be calculated and assigned, and according to which, for example, the PWM control signals may be generated.

In particular, the bridge circuit 25 is configured to operate as a rectifier (both in active configuration and in passive configuration), if the associated modules 2 of the electromagnetic device 1 operate as an electric generator, or as an inverter, if the same modules 2 operate as an electric motor.

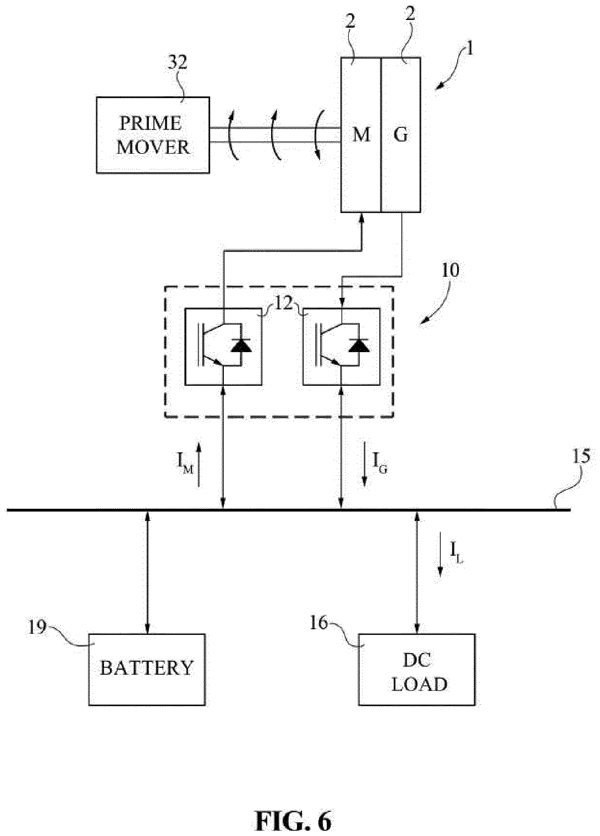

With reference to figure 6, an exemplary use of the conversion system 10 for an electromagnetic device 1 will now be described, having a first section consisting of a given number of modules 2, dedicated to the generation of electric energy, and a second section consisting of a respective number of different modules 2, dedicated to operation as an electric motor; the two sections, and the respective modules 2, operate simultaneously.

A mechanical power source, named prime mover 32, is coupled to the electromagnetic device 1 (alternatively, the mechanical power source may be the fluid which activates the impeller of a turbine, where the electromagnetic device 1 is integrated in the impeller).

As previously shown, the number of modules 2 dedicated to generation of electric energy and to operation as an electric motor may be varied and configured either offline (statically) or online (dynamically) according to the operating needs of the electromagnetic device 1 and/or of the conversion system 10.

In the illustrated embodiment, the first section of the electromagnetic device 1 may advantageously supply the load, for example consisting of a DC load 16 of the resistive type, the following relation being effective:

$$I_G = I_L$$

where $I_G$ is the electric current supplied by the first section, operating as an electric generator, and $I_L$ is the current supplied to the DC load 16.

The propulsive power for the second section of device 1 is instead supplied by the energy storage device 19, the following relation being effective:

$$I_M = I_S$$

where $I_M$ is the electric current supplied to the second section, operating as an electric generator, and $I_S$ is the current supplied by the energy storage device 19.

The configuration illustrated in figure 6 may be advantageous in applications where a mechanical power boost is required; for example, in an aircraft, the main role of the electric machine is to convert part of the mechanical energy generated by the propulsion engine into electric energy for supplying the loads; a mechanical power boost may be supplied to the propulsion engine during take-off by reconfiguring part of the electromagnetic device and utilizing part of the electric machine as a motor.

In particular, both generator and electric motor sections being contained in the electromagnetic device 1 itself allows an obvious reduction of weight, because both sections share the "heavy" parts, such as rotor 3, rotating shaft 4 and casing 8.

The advantages of the described solution are clear from the above discussion.

In particular, such a solution allows to use the electromagnetic device 1 both as a generator and as an electric motor in an intelligent, totally configurable manner, also in real time (online) in addition to during the step of designing (offline). In particular, simultaneous operation as a generator/motor of first and, respectively, second modules 2 forming the electromagnetic device 1 is possible.

Furthermore, the DC conversion of the single-phase (or poly-phase) electric quantities generated by the modules 2 of the electromagnetic device 1 allows to overcome the limitation related to the isomorphism of the electric quantities to be combined, because the combination of the contributions of each module 2 is no longer in AC, where it is important to ensure equality of amplitude, frequency and phase, but in DC, where adjusting the amplitude is sufficient. In particular, the problem of the misalignment of modules 2 and of the variability of the gap is solved electronically, and not longer by means of mechanical calibration.

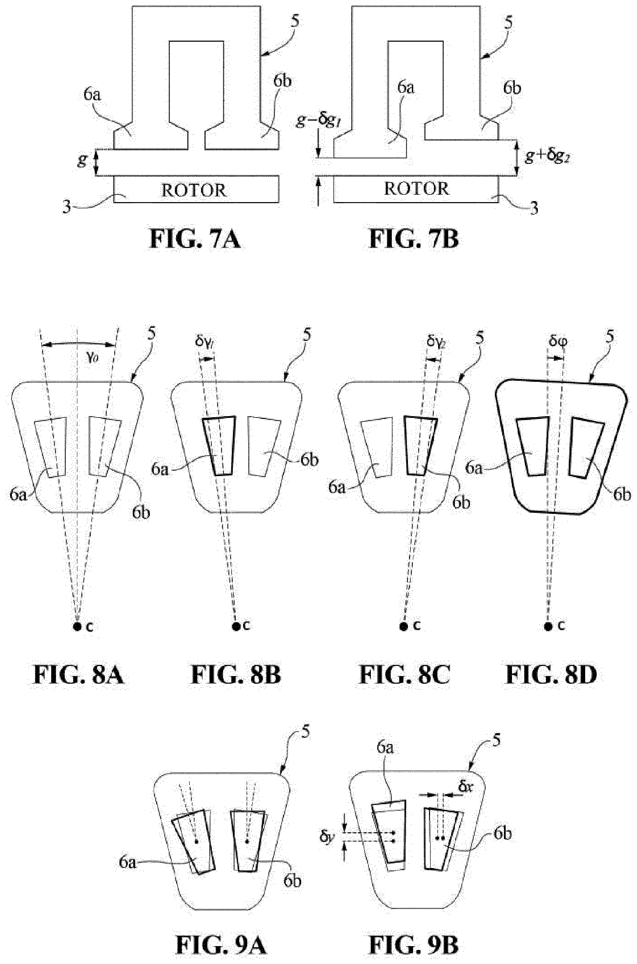

With this regard, reference can be made to figures 7-9 which show some possible misalignment situations caused by manufacturing tolerances, for example.

In detail, figures 7a and 7b diagrammatically show the result of a possible variability, indicated by $\delta g_1$, $\delta g_2$, in the gap g between rotor 3 and magnetic yoke 5 (figure 7a shows the nominal design situation).

Figures 8a-8d diagrammatically show the result of an imperfect alignment between the polar expansions 6a, 6b of the magnetic yoke 5, in particular, figures 8b and 8c, in the form of an angular displacement $\delta\gamma_1$, $\delta\gamma_2$ with respect to a nominal angle $\gamma_0$ (figure 8a) of the symmetry axis (c being the center of rotor 3); alternatively, figure 8d shows an angular displacement $\delta\varphi$ of the position of the entire magnetic yoke 5.

Figures 9a and 9b diagrammatically show the result of a radial misalignment (figure 9a), or on the horizontal plane (figure 9b), (displacement $\delta x$ and $\delta y$ along a first and a second horizontal axis x, y) of the polar expansions 6a and 6b with respect to the nominal arrangement.

The aforesaid feature results in the advantage of not requiring the intervention of a specialized operator having the equipment needed for calibration and does not require machine downtime for implementing corrective actions because these are carried out electronically by automatically controlling the DC voltage, resulting from the conversion of the single/poly-phase quantities generated by the single modules/groups of modules (and by leveling the amplitudes by the capacitive contribution associated with the DC bus 14).

The present solution generally allows to increase the efficiency of the conversion system 10 and to release the constraints and manufacturing tolerances of the modular electric machines by eliminating the phenomenon of recirculation currents caused by the lack of isomorphism of the electromagnetic quantities.

In other words, the suggested solution allows to solve the problems related to constructive asymmetries caused by mechanical manufacturing tolerances (translation and/or rotation), which do not result, in this solution, in the generation of recirculation currents in the modules (or cells) connected in parallel to one another. Indeed, by independently DC converting the contribution of each cell, the need to connect several cells in parallel to one another no longer exists. Possible differences in amplitude, frequency and phase of the alternating quantities output by the cells liable to manufacturing tolerances are no longer present in the DC converted quantities which are sent onto the common DC bus, where it is sufficient to adjust only the amplitude of the output quantities from the AC/DC converters in order to avoid the generation of recirculation currents.

The suggested solution also allows to increase the reliability of the energy conversion system 10 and its fault resistance; indeed, the number of independent conversion branches is equal to the number of modules 2 of the electromagnetic device 1, thus greatly increasing the number of admissible faults.

Furthermore, the intrinsic modularity of the electromagnetic device 1 effectively ensures the physical and magnetic insulation of the various modules 2, and therefore the possibility of fault propagation is minimized.

The presence of the DC network 15, onto which an appropriate energy storage device 19 is to be connected, for example in the form of one or more battery packs, further provides an emergency system for supplying the loads in case of total failure of the conversion system 10.

The suggested solution also allows to obtain clear reductions of weight, dimensions and general complexity of the conversion system 10, and an increase of efficiency and flexibility of use of the same conversion system 10.

**Claims**

1. A power conversion system (10), for a modular electromagnetic device (1) provided with a plurality of modules (2) having reversible operation, operable either as generator or as electric motor, wherein the power conversion system (1) comprises a modular structure **comprising:**

   a plurality of converters (12), each designed to be connected to an assignable number of said modules; and
   control means (20; 21), designed to configure said power conversion system (10), statically and/or dynamically during its operation, by defining the assignment between said converters (12) and a respective number of said modules (2), and/or the operation as generator, or as electric motor, of said modules (2), wherein said control means (20; 21) include a respective local control unit (21) for each converter (12) of the plurality of converters (12), **characterized in that** the local control unit (21) is configured to allow selective
   activation or deactivation of the operation of one or more of associated modules (2) and/or the respective converter (12), even in real time, based on the determination of at least one operating parameter of said modules (2), and to control operation as generator or electric motor of said associated modules, independently and autonomously from the other converters (12) and respective modules (2), thereby at least one first converter (12) is configurable by said control means (20; 21) to be assigned to a respective number of first modules (2), operating as electric generators; and at least one second converter (12) is simultaneously configurable by said control means (20; 21) to be assigned to a respective number of second modules (2), different from said first modules (2), operating as electric motors.

2. The system according to claim 1, wherein said converters (12) are configured to perform an alternating current/direct current conversion - AC/DC conversion - of at least one respective electrical quantity associated to the respective modules (2); further comprising a DC bus (14) to which said converters (12) are connected in a shared manner.

3. The system according to claim 2, wherein said converters (12) have DC interfaces connected in parallel to each other and to the DC bus (14), so that respective DC electric quantities associated to said converters (12) are combinable on said DC bus (14), under control of said control means (20; 21).

**4.** The system according to claim 2 or 3, wherein said DC bus (14) is of the capacitive type; further comprising a DC network (15) associated to said DC bus (14), to which one or more DC loads (16), and/or one or more AC loads (17) with the interposition of respective DC/AC converters (18), are designed to be connected.

**5.** The system according to any one of claims 2-4, further comprising an energy storage device (19), connected to said DC network (15).

**6.** The system according to any one of the preceding claims, wherein each one of said converters (12) is selectively assignable to a respective one of said modules (2), with a single-phase coupling interface.

**7.** The system according to any one of the preceding claims, wherein said control means include a central control unit (20) connected to, and designed to provide control signals to said converters (12).

**8.** The system according to any one of the preceding claims, wherein the local control units (21) of said converters (12) are connected to each other by a communication bus (24), so as to exchange control signals and commands.

**9.** A modular electromagnetic device (1) comprising a plurality of modules (2) having reversible operation, each of which operable either as generator or as electric motor, and the power conversion system (10) according to any one of the preceding claims.

**10.** The device according to claim 9, wherein said modules (2) are mutually independent and have autonomously configurable operation; and wherein one or more of first modules among said modules (2) are designed to operate as generators, and one or more of second modules among said modules (2) are simultaneously designed to operate as electric motors.

**11.** The device according to claim 10, comprising a rotor (3), carrying a plurality of magnets; wherein each of said modules (2) comprises at least one magnetic yoke (5), having polar expansions (6a, 6b), about which a respective coil is wound, arranged facing a respective pair of said magnets; and wherein the coils wound about said polar expansions (6a, 6b) of each magnetic yoke (5) may individually be electrically coupled, alternatively to an electric power source or to an electric user, or load.

**12.** The device according to claim 11, wherein each one of said magnetic yokes (5) is mounted on a respective support (7), the position of which is independently adjustable, axially and radially with respect to the rotor (3), so as to allow a static and/or dynamic adjustment of the gap between the respective polar expansions (6a, 6b) and the respective magnets.

**13.** The device according to any one of claims 9-12, wherein said power conversion system (10) comprises a plurality of converters (12) configured to operate an alternating current/direct current conversion - AC/DC conversion - of at least one respective electric quantity associated to respective ones of said modules (2), and furthermore a DC bus (14) to which said converters (12) are connected in a shared manner; and wherein said power conversion system (10) is configured to electronically compensate for possible constructive asymmetries of said modules (2) due to manufacturing tolerances.

**14.** The device according to any one of claims 9-13, comprising a casing (8), in which said modules (2) and, jointly, said conversion system (10) are assembled in an integrated manner.

**Patentansprüche**

**1.** Leistungsumwandlungssystem (10) für eine modulare elektromagnetische Vorrichtung (1), die mehrere Module (2) mit reversiblem Betrieb aufweist, die entweder als Generator oder als Elektromotor betrieben werden können, wobei das Leistungsumwandlungssystem eine modulare Struktur und Folgendes umfasst:

mehrere Umrichter (12), die jeweils dazu konzipiert sind, mit einer zuweisbaren Anzahl der Module verbunden zu werden; und
Steuermittel (20; 21), die dazu konzipiert sind, das Leistungsumwandlungssystem (10) während seines Betriebs statisch und/oder dynamisch zu konfigurieren, indem sie die Zuordnung zwischen den Umrichtern (12) und einer entsprechenden Anzahl der Module (2) und/oder den Betrieb als Generator oder als Elektromotor der Module (2) definieren,
wobei die Steuermittel (20; 21) eine entsprechende lokale Steuereinheit (21) für jeden Konverter (12) der mehreren Konverter (12) beinhalten, **dadurch gekennzeichnet, dass** die lokale Steuereinheit (21) konfiguriert ist, um eine selektive Aktivierung oder Deaktivierung des Betriebs eines oder mehrerer zugehöriger Module (2) und/oder des jeweiligen Konverters (12) auch in Echtzeit zu ermöglichen, basierend auf der Bestimmung mindestens eines Betriebsparameters der Module (2) und dem Steuern des Betriebs als Generator oder Elektromotor der zugehörigen Module unabhängig und autonom von den anderen Umrichtern (12) und den jeweiligen Modulen (2), wodurch mindestens ein erster Umrichter (12) durch die Steuermittel (20; 21) konfigurierbar ist, die einer entsprechenden Anzahl von ersten Modulen (2) zugeordnet werden können, die als elektrische Generatoren arbeiten; und mindestens ein zweiter Umrichter (12) gleichzeitig durch die Steuermittel (20; 21) konfigurierbar ist, die einer entsprechenden Anzahl von zweiten Modulen (2) zugeordnet werden können, die sich von den ersten Modulen (2) unterscheiden und als Elektromotoren arbeiten.

2. System nach Anspruch 1, wobei die Umrichter (12) konfiguriert sind, um eine Wechselstrom-/Gleichstromwandlung - AC/DC-Wandlung - von mindestens einer jeweiligen elektrischen Größe durchzuführen, die den jeweiligen Modulen (2) zugeordnet ist; ferner umfassend einen DC-Bus (14), mit dem die Umrichter (12) auf eine gemeinsame Weise verbunden sind.

3. System nach Anspruch 2, wobei die Umrichter (12) DC-Schnittstellen aufweisen, die parallel zueinander und mit dem DC-Bus (14) verbunden sind, so dass die jeweiligen den Umrichtern (12) zugeordneten elektrischen Gleichstromgrößen auf dem DC-Bus (14) unter Steuerung der Steuermittel (20; 21) kombinierbar sind.

4. System nach Anspruch 2 oder 3, wobei der DC-Bus (14) vom kapazitiven Typ ist; ferner umfassend ein dem DC-Bus (14) zugeordnetes DC-Netzwerk (15), an das eine oder mehrere DC-Lasten (16) und/oder eine oder mehrere AC-Lasten (17) unter Zwischenschaltung entsprechender DC/AC-Umrichter (18) zum Verbinden konzipiert sind.

5. System nach einem der Ansprüche 2-4, ferner umfassend eine Energiespeichervorrichtung (19), die mit dem DC-Netzwerk (15) verbunden ist.

6. System nach einem der vorhergehenden Ansprüche, wobei jeder der Umrichter (12) selektiv einem jeweiligen der Module (2) mit einer einphasigen Kopplungsschnittstelle zuordenbar ist.

7. System nach einem der vorhergehenden Ansprüche, wobei die Steuermittel eine zentrale Steuereinheit (20) beinhalten, die mit den Umrichtern (12) verbunden ist und dazu konzipiert ist, Steuersignale an diese bereitzustellen.

8. System nach einem der vorhergehenden Ansprüche, wobei die lokalen Steuereinheiten (21) der Umrichter (12) durch einen Kommunikationsbus (24) miteinander verbunden sind, um Steuersignale und Befehle auszutauschen.

9. Modulare elektromagnetische Vorrichtung (1), umfassend mehrere Module (2) mit reversiblem Betrieb, von denen jedes entweder als Generator oder als Elektromotor betrieben werden kann, und das Leistungsumwandlungssystem (10) nach einem der vorhergehenden Ansprüche.

10. Vorrichtung nach Anspruch 9, wobei die Module (2) voneinander unabhängig sind und einen autonom konfigurierbaren Betrieb aufweisen; und wobei eines oder mehrere der ersten Module unter den Modulen (2) so konzipiert sind, dass sie als Generatoren arbeiten, und eines oder mehrere der zweiten Module unter den Modulen (2) gleichzeitig so konzipiert sind, dass sie als Elektromotoren arbeiten.

11. Vorrichtung nach Anspruch 10, umfassend einen Rotor (3), der mehrere Magnete trägt; wobei jedes der Module (2) mindestens ein Magnetjoch (5) mit polaren Ausdehnungen (6a, 6b) umfasst, um das herum eine jeweilige Spule gewickelt ist, die gegenüber einem jeweiligen Paar der Magnete angeordnet ist; und wobei die um die polaren Ausdehnungen (6a, 6b) jedes Magnetjochs (5) gewickelten Spulen einzeln elektrisch gekoppelt werden können, alternativ zu einer elektrischen Leistungsquelle oder zu einem elektrischen Benutzer oder einer Last.

12. Vorrichtung nach Anspruch 11, wobei jede der magnetischen Joche (5) auf einem jeweiligen Träger (7) montiert ist, dessen Position in Bezug auf den Rotor (3) unabhängig voneinander axial und radial einstellbar ist, um eine statische und/oder dynamische Anpassung des Spaltes zwischen den jeweiligen polaren Ausdehnungen (6a, 6b) und den jeweiligen Magneten zu ermöglichen.

13. Vorrichtung nach einem der Ansprüche 9-12, wobei das Leistungsumwandlungssystem (10) mehrere Umrichter (12) umfasst, die konfiguriert sind, um eine Wechselstrom-/Gleichstromwandlung - AC/DC-Wandlung - von mindestens einer entsprechenden elektrischen Größe zu betreiben, die den jeweiligen Modulen (2) zugeordnet ist, und ferner einen DC-Bus (14), mit dem die Umrichter (12) gemeinsam verbunden sind; und wobei das Leistungsumwandlungssystem (10) konfiguriert ist, um mögliche konstruktive Asymmetrien der Module (2) aufgrund von Fertigungstoleranzen elektronisch zu kompensieren.

14. Vorrichtung nach einem der Ansprüche 9-13, umfassend ein Gehäuse (8), in dem die Module (2) und das Umwandlungssystem (10) gemeinsam integriert montiert sind.

**Revendications**

1. Système de conversion de puissance (10), pour un dispositif électromagnétique modulaire (1) pourvu d'une pluralité de modules (2) ayant un fonctionnement réversible, pouvant fonctionner soit en tant que générateur soit en tant que moteur électrique, dans lequel le système de conversion de puissance (1) comprend une structure modulaire et comprend :

    une pluralité de convertisseurs (12), conçus chacun pour être connecté à un nombre attribuable desdits modules ; et
    des moyens de commande (20 ; 21), conçus pour configurer ledit système de conversion de puissance (10), statiquement et/ou dynamiquement pendant son fonctionnement, en définissant l'attribution entre lesdits convertisseurs (12) et un nombre respectif desdits modules (2), et/ou le fonctionnement en tant que générateur, ou en tant que moteur électrique, desdits modules (2),
    dans lequel lesdits moyens de commande (20; 21) comportent une unité de commande locale (21) respective pour chaque convertisseur (12) de la pluralité de convertisseurs (12), **caractérisé en ce que** l'unité de commande locale (21) est configurée pour permettre une activation ou désactivation sélective du fonctionnement d'un ou de plusieurs des modules associés (2) et/ou du convertisseur (12) respectif, même en temps réel, sur la base de la détermination d'au moins un paramètre de fonctionnement desdits modules (2), et pour commander un fonctionnement en tant que générateur ou moteur électrique desdits modules associés, indépendamment et de manière autonome par rapport aux autres convertisseurs (12) et des modules (2) respectifs, ainsi au moins un premier convertisseur (12) est configurable par lesdits moyens de commande (20; 21) pour être attribué à un nombre respectif de premiers modules (2), fonctionnant en tant que générateurs électriques; et au moins un deuxième convertisseur (12) est simultanément configurable par lesdits moyens de commande (20 ; 21) pour être attribué à un nombre respectif de deuxièmes modules (2), différents desdits premiers modules (2), fonctionnant en tant que moteurs électriques.

2. Système selon la revendication 1, dans lequel lesdits convertisseurs (12) sont configurés pour réaliser une conversion courant alternatif/courant continu - conversion C.A/C.C. - d'au moins une grandeur électrique respective associée aux modules (2) respectifs; comprenant, en outre, un bus C.C. (14) auquel sont connectés lesdits convertisseurs (12) de manière partagée.

3. Système selon la revendication 2, dans lequel lesdits convertisseurs (12) ont des interfaces C.C. connectées en parallèle les unes aux autres et au bus C.C. (14), de sorte que des grandeurs électriques C.C. respectives associées auxdits convertisseurs (12) puissent être combinées sur ledit bus C.C. (14), sous la commande desdits moyens de commande (20 ; 21).

4. Système selon la revendication 2 ou 3, dans lequel ledit bus C.C. (14) est du type capacitif; comprenant, en outre, un réseau C.C. (15) associé audit bus C.C. (14), auquel une ou plusieurs charges C.C. (16), et/ou une ou plusieurs charges C.A (17) avec l'interposition de convertisseurs C.C/C.A (18) respectifs, sont conçues pour être connectées.

5. Système selon l'une quelconque des revendications 2 à 4, comprenant, en outre, un dispositif de stockage d'énergie (19), connecté audit réseau C.C. (15).

6. Système selon l'une quelconque des revendications précédentes, dans lequel chacun desdits convertisseurs (12) peut être sélectivement attribué à l'un respectif desdits modules (2), avec une interface de couplage monophasée.

7. Système selon l'une quelconque des revendications précédentes, dans lequel lesdits moyens de commande comportent une unité de commande centrale (20) connectée aux et conçue pour fournir des signaux de commande auxdits convertisseurs (12).

8. Système selon l'une quelconque des revendications précédentes, dans lequel les unités de commande locale (21) desdits convertisseurs (12) sont connectées les unes aux autres par un bus de communication (24), de façon à échanger des signaux et des ordres de commande.

9. Dispositif électromagnétique modulaire (1) comprenant une pluralité de modules (2) ayant un fonctionnement réversible, dont chacun peut fonctionner en tant que générateur ou en tant que moteur électrique, et le système de conversion de puissance (10) selon l'une quelconque des revendications précédentes.

10. Dispositif selon la revendication 9, dans lequel lesdits modules (2) sont mutuellement indépendants et ont un fonctionnement configurable de manière autonome ; et dans lequel un ou plusieurs des premiers modules parmi lesdits modules (2) sont conçus pour fonctionner en tant que générateurs, et un ou plusieurs des deuxièmes modules parmi lesdits modules (2) sont simultanément conçus pour fonctionner en tant que moteurs électriques.

**11.** Dispositif selon la revendication 10, comprenant un rotor (3), portant une pluralité d'aimants; dans lequel chacun desdits modules (2) comprend au moins une culasse magnétique (5), ayant des extensions polaires (6a, 6b), autour desquelles une bobine respective est enroulée, agencée en regard d'une paire respective desdits aimants ; et dans lequel les bobines enroulées autour desdites extensions polaires (6a, 6b) de chaque culasse magnétique (5) peuvent individuellement être couplées électriquement alternativement à une source d'alimentation électrique ou à un appareil électrique, ou une charge.

**12.** Dispositif selon la revendication 11, dans lequel chacune desdites culasses magnétiques (5) est montée sur un support (7) respectif, dont la position peut être indépendamment ajustée, axialement et radialement par rapport au rotor (3), de façon à permettre un ajustement statique et/ou dynamique de l'écartement entre les extensions polaires (6a, 6b) respectives et les aimants respectifs.

**13.** Dispositif selon l'une quelconque des revendications 9 à 12, dans lequel ledit système de conversion de puissance (10) comprend une pluralité de convertisseurs (12) configurés pour exécuter une conversion courant alternatif/courant continu - conversion C.A/C.C. - d'au moins une grandeur électrique respective associée à plusieurs respectifs parmi lesdits modules (2), et en outre un bus C.C. (14) auquel lesdits convertisseurs (12) sont connectés de manière partagée ; et dans lequel ledit système de conversion de puissance (10) est configuré pour compenser électroniquement des asymétries de construction possibles desdits modules (2) en raison de tolérances de fabrication.

**14.** Dispositif selon l'une quelconque des revendications 9 à 13, comprenant un boîtier (8), dans lequel lesdits modules (2) et, conjointement, ledit système de conversion (10) sont assemblés de manière intégrée.

FIG. 1

**FIG. 2**

EP 2 830 190 B1

**FIG. 3**

**FIG. 4**

EP 2 830 190 B1

FIG. 5

**FIG. 6**

**FIG. 7A**          **FIG. 7B**

**FIG. 8A**     **FIG. 8B**     **FIG. 8C**     **FIG. 8D**

**FIG. 9A**          **FIG. 9B**

**EP 2 830 190 B1**

### Patent documents cited in the description

- WO 2009093181 A
- WO 2009093183 A
- US 5514923 A
- WO 2004004109 A2